# EUROPEAN PATENT SPECIFICATION

(11) **EP 1 778 782 B1**
(45) Date of publication and mention of the grant of the patent: **25.02.2009**
(21) Application number: 05781627.4
(22) Date of filing: 05.08.2005
(51) Int. Cl.: C08L 23/10, C08K 3/04

(54) **PROCESS FOR PRODUCING CLEAR POLYPROPYLENE BASED STRETCH BLOW MOLDED CONTAINERS WITH IMPROVED INFRARED HEAT-UP RATES**
VERFAHREN ZUR HERSTELLUNG VON HELLEM POLYPROPYLEN BASIEREND AUF STRECKBLASGEFORMTEN BEHÄLTERN MIT VERBESSERTEN INFRAROT-AUFWÄRMRATEN
PROCEDE DE PRODUCTION DE RECIPIENTS TRANSPARENTS EN POLYPROPYLENE PAR MOULAGE PAR SOUFFLAGE BI-ORIENTE, AVEC DES NIVEAUX DE CHAUFFAGE INFRAROUGE AMELIORES

(30) Priority: 18.08.2004 US 602541 P
(43) Date of publication of application: 02.05.2007
(73) Proprietor: Basell Poliolefine Italia S.r.l., 20124 Milano (IT)
(72) Inventor: MC KEEMAN, David, H., Kennett Square, Pennsylvania 19348 (US); BRASEL, Timothy, C., Newark, Delaware 19711 (US); ROBESON, Leroy, V., Hockessin, Delaware 19707 (US); WOERZ, Alexander, 67269 Gruenstadt (DE); SARTORI, Gabriella, I-44100 Ferrara (IT)
(74) Representative: Gaverini, Gaetano Luigi Attilio
(86) International application number: PCT/IB2005/052620
(87) International publication number: WO 2006/018777

(56) References cited:
- WO-A-20/04083294
- WO-A-20/04099301
- US-A- 4 476 272
- US-A- 5 604 289
- US-A1- 2004 099 997
- US-A1- 2004 180 159
- US-B1- 6 503 586

## Description

This invention relates to a process for producing clear stretch blow molded containers with improved infrared heat-up rates, using polymer compositions suitable for hot-fill and retort applications.

Stretch blow molding procedures, such as injection stretch blow molding, are widely used for producing containers that meet commercial transparency requirements. Polyethylene Terephthalate ("PET") has often been used in injection stretch blow molding processes because of its desirable transparency characteristics. Infrared heat absorbents have been used in PET compositions. U.S. 4,481,314 discloses polyester compositions containing anthraquinone derivatives as infrared energy absorbents. U.S. 4,408,004 discloses polyester compositions containing carbon black as an infrared energy absorbent for blow molding of beverage bottles. However, PBT is relatively expensive, and is not typically suitable for those applications where the containers must be retorted, or for hot-fill applications, which may be required for applications involving consumable materials.

Polypropylene based containers are more cost effective than PET based material, and can be retorted in food and liquid applications. WO 99/41293 describes a process for producing injection stretch blow molded containers from propylene polymers using metallocene catalysts. However, polypropylene does not typically absorb heat as efficiently as PET. U.S. 5,604,289 discloses thermoplastic compositions containing carbon black as an infrared radiation absorbent. However, the reinforcing components also contained in these compositions result in molded articles that are opaque. Therefore, a need still exists for a process that produces clear stretch blow molded containers with improved infrared heat-up rates, using polymer compositions that are suitable for hot-fill or retortable applications.

The present invention relates to a process for producing clear stretch blow molded containers, the process comprising:
I. molding a propylene polymer composition, preferably at a temperature of about 200°C to about 280°C, the propylene polymer composition comprising:
   (A) a propylene polymer consisting of:
      (i) about 25 wt% to about 75 wt%, more preferably about 35 wt% to about 65 wt% of a homopolymer having an isotactic index greater than about 80%, preferably about 90% to about 99.5%; and
      (ii) about 25 wt% to about 75 wt%, more preferably about 35 wt% to about 65 wt% of a random copolymer of propylene and at least one olefin chosen from ethylene and C₄-C₁₀ α-olefins, containing about 0.3 to about 30 wt% of said olefin, preferably about 0.3 to about 20 wt%, and having an isotactic index greater than about 60%, preferably greater than about 70%.
      the propylene polymer having a melt flow rate of about 1 to about 50;
      and
   (B) about 1 to about 1000 ppm, based on the weight of the propylene polymer, of at least one radiant heat absorbent that absorbs infrared radiation having a radiation wavelength of from about 700 to about 25,000 nm.
      thereby forming a preform; and
II. stretch blow molding the perform, preferably at a temperature of about 100°C to about 160°C;
wherein in step II, heat is supplied by infrared radiation, and the containers have a haze value less than 25.0%.

The polymer compositions used in the process of the invention provide good transparency and processing characteristics, and typically have a melt flow of from about 1 to about 50, preferably, from about 2 to about 40. The compositions containing both propylene homopolymers and propylene random copolymers provide a wider processing window due to a broader melting point distribution.

Containers manufactured from the propylene polymer compositions used in the present invention are suitable for hot-fill applications. In these processes, materials such as syrup, teas and fruit juices are heated and then placed in the container. Typical hot-fill temperatures are from about 70°C to about 104°C. The containers are also suitable for retorting applications where the filled containers are heated to sterilize the contents, typically at temperatures above 100°C, preferably at temperatures from about 104°C to about 135 °C.

Preferably, the propylene polymer material used in the containers of the present invention are produced with conventional polymerization processes. For example, the polymer material can be prepared by polymerizing the monomers in one or more consecutive or parallel stages. The polymerization can be carried out in any known manner in bulk, in suspension, in the gas phase or in a supercritical medium. It can be carried out batcbwise or preferably continuously. Solution processes, suspension processes, stirred gas-phase processes or gas-phase fluidized-bed processes are possible. As solvents or suspension media, it is possible to use inert hydrocarbons, for example isobutane, or the monomers themselves. It is also possible to carry out one or more steps of the process of the present invention in two or more reactors. The size of the reactors is not of critical importance for the process of the present invention. It depends on the output which is to be achieved in the individual reaction zone(s).

Preferably, the polymerization of the propylene homopolymer A in a first step, as well as the propylene copolymer B in a second step, is carried out either in bulk, i.e. in liquid propylene as suspension medium, or else from the gas phase. If all polymerizations take place from the gas phase, the polymerization steps are preferably carried out in a cascade comprising stirred gas-phase reactors which are connected in series and in which the pulverulent reaction bed is kept in motion by means of a vertical stirrer. The reaction bed generally consists of the polymer which is polymerized in the respective reactor. If the initial polymerization of the propylene homopolymer A is carried out in bulk, preference is given to using a cascade made up of one or more loop reactors and one or more gas-phase fluidized-bed reactors. The preparation can also be carried out in a multizone reactor.

Alternately, the individual polymer components may be prepared separately and then physically blended.

The propylene polymer materials used in the process of the invention can be prepared by Ziegler-Natta or Single-Site (e.g. metallocene) catalysts. When a metallocene Single-Site catalyst is used, a preferred class of metallocene compounds is that of formula (I): 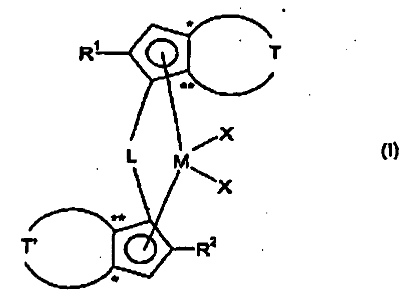 where
- M: is zirconium, hafnium or titanium,
- X: are identical or different and are each, independently of one another, hydrogen or halogen or a group -R, -OR, -OSO₂CF₃, -OCOR, -SR, -NR₂ or -PR₂, where R is linear or branched C₁-C₂₀-alkyl, C₃-C₂₀-cycloalkyl which may bear one or more C₁-C₁₀-alkyl radicals as substituents, C₆-C₂₀-aryl, C₇-C₂₀-alkylaryl or C₇-C₂₀-arylalkyl and may contain one or more heteroatoms from groups 13 - 17 of the Periodic Table of the Elements or one or more unsaturated bonds, with the two radicals X also being able to be joined to one another,
- L: is a divalent bridging group selected from the group consisting of C₁-C₂₀-alkylidene, C₃-C₂₀-cycloalkylidene, C₆-C₂₀-arylidene, C₇-C₂₀-alkylarylidene and C₇-C₂₀-arylalkylidene radicals which may contain heteroatoms from groups 13 - 17 of the Periodic Table of the Elements or is a silylidene group having up to 5 silicon atoms,
- R¹ and R²: are identical or different and are each, independently of one another, hydrogen or linear or branched C₁-C₂₀-alkyl or C₃-C₂₀-cycloalkyl which may bear one or more C₁-C₁₀-alkyl radicals as substituents, C₆-C₂₀-aryl, C₇-C₄₀-alkylaryl or C₇-C₄₀-arylalkyl and may contain one or more heteroatoms from groups 13 - 17 of the Periodic Table of the Elements or one or more unsaturated bonds,
- T and T': are divalent groups of the formulae (II), (III), (IV), (V), (VI) or (VII), 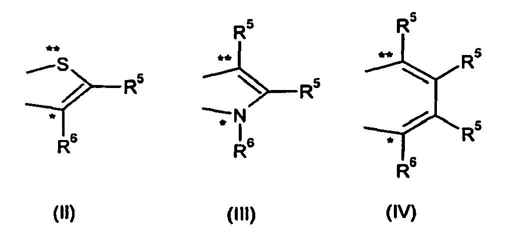 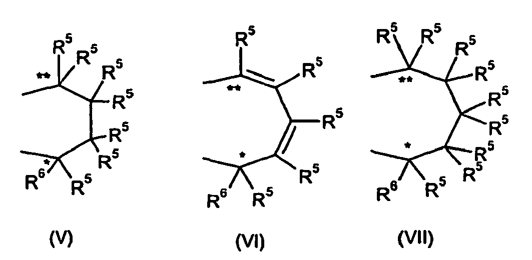
where
the atoms denoted by the symbols * and ** are in each case joined to the atoms of the compound of the formula (I) which are denoted by the same symbol, and
- R⁵ and R⁶: are identical or different and are each, independently of one another, hydrogen or halogen or linear or branched C₁-C₂₀-akyl or C₃-C₂₀-cycloalkyl which may bear one or more C₁-C₁₀-alkyl radicals as substituents, C₆-C₄₀-aryl, C₇-C₄₀-akylaryl or C₇-C₄₀-arylalkyl and may contain one or more heteroatoms from groups 13 -17 of the Periodic Table of the Elements or one or more unsaturated bonds or two radicals R⁵ or R⁵ and R⁶ are joined to one another to form a saturated or unsaturated C₃-C₂₀ ring,

Among the metallocene compounds of the formula (I), particular preference is given to those in which M is zirconium.

Furthermore, preference is given to metallocene compounds of the formula (I) in which the substituent R in the radicals X is C₁-C₁₀-alkyl such as methyl, ethyl, n-propyl, isopropyl, n-butyl, isobutyl, sec-butyl, tert-butyl, n-pentyl, n-hexyl, n-heptyl or n-octyl or C₃-C₂₀-cycloalkyl such as cyclopentyl or cyclohexyl. Preference is also given to metallocene compounds of the formula (I) in which the two radicals X are joined to one another so as to form a C₄-C₄₀-dienyl ligand, in particular a 1,3-dienyl ligand, or an -OR'O-, group in which the substituent R' is a divalent group selected from the group consisting of C₁-C₄₀-alkylidene, C₆-C₄₀-arylidene, C₇-C₄₀-alkylarylidene and C₇-C₄₀-arylalkylidene. X is particularly preferably a halogen atom or an -R or -OR group or the two radicals X form an -OR'O- group; X is very particularly preferably chlorine or methyL

In preferred metallocene compounds of the formula (I), the divalent group L is a radical selected from the group consisting of the silylidenes -SiMe₂-, -SiPh₂-, -SiPhMe- and -SiMe(SiMe₃)- and the alkylidenes -CH₂-, -(CH₂)₂-, -(CH₂)₃- and -C(CH₃)₂-.

Preferred radicals R¹ and R² in the metallocene compounds of the formula (I) are linear or branched C₁-C₁₀-alkyl, in particular a linear C₁-C₄-alkyl group such as methyl, ethyl, n-propyl or n-butyl or a branched C₃- or C₄-akyl group such as isopropyl or tert-butyl. In a particularly preferred embodiment, the radicals R¹ and R² are identical and are, in particular, both methyl, ethyl or isopropyl. In a further particularly preferred embodiment, R¹ is a linear or branched C₁-C₁₀-akyl group which is unbranched in the α position, in particular a linear C₁-C₄-alkyl group such as methyl, ethyl, n-propyl or n-butyl, and R² is a C₃-C₁₀-alkyl group which is branched in the a position, in particular a branched C₃- or C₄-alkyl group such as isopropyl or tert-butyl.

In preferred metallocene compounds of the formula (I), the radicals R⁵ are each hydrogen or a linear or branched C₁-C₁₀-alkyl group, in particular a C₁-C₄-alkyl group such as methyl, ethyl, n-propyl, i-propyl or n-butyl, or a C₃-C₁₀-cycloalkyl group, in particular C₅-C₆-cycloalkyl such as cyclopentyl and cyclohexyl, C₆-C₁₈-aryl such as phenyl or naphthyl and C₇-C₂₄-alkylaryl, such as methylphenyl, ethylphenyl, n-propylphenyl, i-propylphenyl, t-butylphenyl, dimethylphenyl, diethylphenyl, diisopropylphenyl, ditertbutylphenyl, trimethylphenyl, methyl-t-butylphenyl, methylnaphthyl and dimethylnaphthyl or where two adjacent radicals R⁵ may be joined to form a 5-7-membered ring.

Furthermore, preference is given to metallocene compounds of the formula (I) in which R⁶ together with an adjacent radical R⁵ forms a cyclic system, in particular a unsaturated 6-membered ring, or R⁶ is an aryl group of the formula (XI), 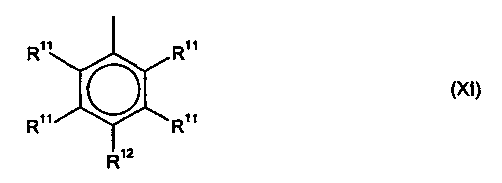 where
- R¹¹: are identical or different and are each, independently of one another, hydrogen or halogen or linear or branched C₁-C₂₀-alkyl, C₃-C₂₀-cycloalkyl which may bear one or more C₁-C₁₀-alkyl radicals as substituents, C₆-C₂₀-aryl, C₇-C₂₀-akylaryl or C₇-C₂₀-arylalkyl and may contain one or more heteroatoms from groups 13 - 17 of the Periodic Table of the Elements or one or more unsaturated bonds, or two radicals R¹¹ may be joined to form a unsaturated C₃-C₂₀ ring,
with preference being given to R¹¹ being a hydrogen atom, and
- R¹²: is hydrogen or halogen or linear or branched C₁-C₂₀-akyl, C₃-C₂₀-cycloalkyl which may bear one or more C₁-C₁₀-akyl radicals as substituents, C₆-C₂₀-aryl, C₇-C₂₀-alkylaryl or C₇-C₂₀-arylalkyl and may contain one or more heteroatoms from groups 13 - 17 of the Periodic Table of the Elements or one or more unsaturated bonds, with preference being given to R¹² being a branched alkyl group of the formula -C(R¹³)₃, where
- R¹³: are identical or different and are each, independently of one another, a linear or branched C₁-C₆-alkyl group or two or three radicals R¹³ are joined to form one or more ring systems.

Preferably, at least one of the groups T and T' is substituted by a radical R⁶ of the formula (XI). Particular preference is given to both groups T and T' being substituted by such a radical. Very particular preference is then given to at least one of the groups T and T' being a group of the formula (IV) which is substituted by a radical R⁶ of the formula (XI) and the other having either the formula (II) or (IV) and likewise being substituted by a radical R⁶ of the formula (VII). In particular, such metallocene compounds have the formula (XII)

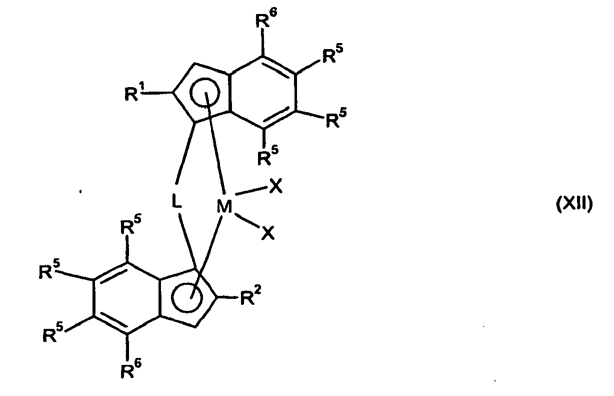

Particularly useful metallocene compounds and processes for preparing them are described, for example, in WO 01/48034 and WO 03/045964.

The metallocene compounds of the formula (I) are preferably used in the rac or pseudo-rac form; the term pseudo-rac form refers to complexes in which the two groups T and T' are in the rac arrangement relative to one another when all other substituents of the complex are disregarded.

It is also possible to use mixtures of various metallocene compounds.

Examples of particularly useful metallocene compounds of the formula (I) are dimethylsilanediylbis(indenyl)zirconium dichloride, dimethylsilanediylbis(tetrahydroindenyl)zirconium dichloride, ethylenebis(indenyl)zirconium dichloride, ethylenebis(tetrahydroindenyl)zirconium dichloride, dimethylsilanediylbis(2-methylindenyl)zirconium dichloride, dimethylsilanediylbis(2-isopropylindenyl)zirconium dichloride, dimethylsilanediylbis(2-tert-butylindenyl)zirconium dichloride, diethylsilanediylbis(2-methylindenyl)zirconium dibromide, dimethylsilanediylbis(2-ethylindenyl)zirconium dichloride, dimethylsilanediylbis(2-methyl-4,5-benzindenyl)zirconium dichloride dimethylsilanediylbis(2-ethyl-4,5-benzindenyl)zirconium dichloride methylphenylsilanediylbis(2-methyl-4,5-benzindenyl)zirconium dichloride, methylphenylsilanediylbis(2-ethyl-4,5-benzindenyl)zirconium dichloride, diphenylsilanediylbis(2-methyl-4,5-benzindenyl)zirconium dichloride, diphenylsilanediylbis(2-ethyl-4,5-benzindenyl)zirconium dichloride, diphenylsilanediylbis(2-methylindenyl)hafnium dichloride, dimethylsilanediylbis(2-methyl-4-phenylindenyl)zirconium dichloride, dimethylsilanediylbis(2-ethyl-4-phenylindenyl)zirconium dichloride, dimethylsilanediylbis(2-methyl-4-(1-naphthyl)indenyl)zirconium dichloride, dimethylsilanediylbis(2-ethyl-4-(1-naphthyl)-indenyl)zirconium dichloride, dimethylsilanediylbis(2-propyl-4-(1-naphthyl)indenyl)zirconium dichloride, dimethylsilanediylbis(2-i-butyl-4-(1-naphthyl)indenyl)zirconium dichloride, dimethylsilanediylbis(2-propyl-4-(9-phenanthryl)indenyl)zirconium dichloride, dimethylsilanediylbis(2-methyl-4-isopropylindenyl)zirconium dichloride, dimethylsilanediylbis(2,7-dimethyl-4-isopropylindenyl)zirconium dichloride, dimethylsilanediylbis(2-methyl-4,6-diisopropylindenyl)zirconium dichloride, dimethylsilanediylbis(2-methyl-4-(p-trifluoromethylphenyl)indenyl)zirconium dichloride, dimethylsilanediylbis(2-methyl-4-(3',5'-dimethylphenyl)indenyl)zirconium dichloride, dimethylsilanediylbis(2-methyl-4-(4'-tert-butylphenyl)indenyl)zirconium dichloride, diethylsilanediylbis(2-methyl-4-(4'-tert-butylphenyl)indenyl)zirconium dichloride, dimethylsilanediylbis(2-ethyl-4-(4'-tert-butylphenyl)indenyl)zirconium dichloride, dimethylsilanediylbis(2-propyl-4-(4'-tert-butylphenyl)indenyl)zirconium dichloride, dimethylsilanediylbis(2-isopropyl-4-(4'-tert-butylphenyl)indenyl)zirconium dichloride, dimethylsilanediylbis(2-n-butyl-4-(4'-tert-butylphenyl)indenyl)zirconium dichloride, dimethylsilanediylbis(2-hexyl-4-(4'-tert-butylphenyl)indenyl)zirconium dichloride, dimethylsilanediyl(2-isopropyl-4-phenylindenyl)(2-methyl-4-phenylindenyl)zirconium dichloride, dimethylsilanediyl(2-isopropyl-4-(1-naphthyl)indenyl)(2-methyl-4-(1-naphthyl)indenyl)zirconium dichloride, dimethylsilanediyl(2-isopropyl-4-(4'-tert-butylphenyl)indenyl)(2-methyl-4-(4'-tert-butylphenyl)indenyl)zirconium dichloride, dimethylsilanediyl(2-isopropyl-4-(4'-tert-butylphenyl)indenyl)(2-ethyl-4-(4'-tert-butylphenyl)indenyl)zirconium dichloride, dimethylsilanediyl(2-isopropyl-4-(4'-tert-butylphenyl)indenyl)(2-methyl-4-(3',5'-bis-tert-butylphenyl)indenyl)zirconium dichloride, dimethylsilanediyl(2-isopropyl-4-(4'-tert-butylphenyl)indenyl)(2-methyl-4-(1'-naphthyl)indenyl)zirconium dichloride ethylene(2-isopropyl-4-(4'-tert-butylphenyl)indenyl)(2-methyl-4-(4'-tert-butylphenyl)indenyl)zirconium dichloride dimethylsilanediyl(2-methyl-4-(4'-tert-butylphenyl)indenyl)2-isopropyl 4-(1-naphtyl)indenyl)zirconium dichloride, dimethylsilanediyl(2-methyl-4-phenyl)-1-indenyl)(2-isopropyl-4-(4'-tert-butylphenyl)-1-indenyl)zirconium dichloride, dimethylsilanediyl(2-isopropyl-4-(4'-tert-butylphenyl)indenyl)(2,6-dimethyl-4-(4'-tert-butylphenyl)indenyl)zirconium dichloride, dimethylsilanediyl(2-isopropyl-4-(4'-tert-butylphenyl)indenyl)(2,7-dimethyl-4-(4'-tert-butylphenyl)indenyl)zirconium dichloride, dimethylsilanediyl(2-isopropyl-4-(4'-tert-butylphenyl)indenyl)(2,5,6,7-tetramethyl-4-(4'-tert-butylphenyl)indenyl)zirconium dichloride, dimethylsilanediyl(2-isopropyl-4-phenylindenyl)(6-methyl-4-phenyl-1,2,3,5-tetrahydro-s-indacen-7-yl)zirconium dichloride, dimethylsilanediyl(2-isopropyl-4-phenylindenyl)(6-methyl-4-(4'-tert-butylphenyl)-1,2,3,5-tetrahydro-s-indacen-7-yl)zirconium dichloride, dimethylsilanediyl(2-isopropyl-4-(4'-tert-butylphenyl)indenyl)(6-methyl-4-phenyl-1,2,3,5-tetrahydro-s-indacen-7-yl)zirconium dichloride, dimethylsilanediyl(2-isopropyl-4-(4'-tert-butylphenyl)indenyl)(6-methyl-4-(4'-tert-butylphenyl)-1,2,3,5-tetrahydro-s-indacen-7-yl)zirconium dichloride, dimethylsilanediyl(2-isopropyl-4-(4'-tert-butylphenyl)indenyl)(2-methyl-4,5-benzoindenyl)-zirconium dichloride, dimethylsilanediyl(2-methyl-4-(4'-tert-butylphenyl)indenyl)(2-isopropyl-4-phenylindenyl)zirconium dichloride, dimethylsilanediyl(2-ethyl-4-(4'-tert-butylphenyl)indenyl)(2-isopropyl-4-phenyl)indenyl)zirconium dichloride, dimethylsilandiylbis-6-(3-methylcyclopentadienyl-[1,2-b]-thiophene) dimethyl; dimethylsilandiylbis-6-(4-methylcyclopentadienyl-[1,2-b]-thiophene)zirconium dichloride; dimethylsilandiylbis-6-(4-isopropylcyclopentadienyl-[1,2-b]-thiophene)zirconium dichloride; dimethylsilandiylbis-6-(4-ter-butylcyclopentadienyl-[1,2-b]-thiophene)zirconium dichloride; dimethylsilandiylbis-6-(3-isopropylcyclopentadienyl-[1,2-b]-thiophene)zirconium dichloride; dimethylsilandiylbis-6-(3-phenylcyclopentadienyl-[1,2-b]-thiophene)zirconium dichloride; dimethylsilandiylbis-6-(2,5-dimethyl-3-phenylcyclopentadienyl-[1,2-b]-thiophene)zirconium di-methyl; dimethylsilandiylbis-6-[2,5-dimethyl-3-(2-methylphenyl)cyclopentadienyl-[1,2-b]-thiophene]zirconium dichloride; dimethylsilandiylbis-6-[2,5-dimethyl-3-(2,4,6-trimethylphenyl)cyclopentadienyl-[1,2-b]-thiophene]zirconium dichloride; dimethylsilandiylbis-6-[2,5-dimethyl-3-mesitylenecyclopentadienyl-[1,2-b]-thiophene]zirconium dichloride; dimethylsilandiylbis-6-(2,4,5-trimethyl-3-phenylcyclopentadienyl-[1,2-b]-thiophene)zirconium dichloride; dimethylsilandiylbis-6-(2,5-diethyl-3-phenylcyclopentadienyl-[1,2-b]-thiophene)zirconium dichloride; dimethylsilandiylbis-6-(2,5-diisopropyl-3-phenylcyclopentadienyl-[1,2-b]-thiophene)zirconium dichloride; dimethylsilandiylbis-6-(2,5-diter-butyl-3-phenylcyclopentadienyl-[1,2-b]-thiophene)zirconium dichloride; dimethylsilandiylbis-6-(2,5-ditrimethylsilyl-3-phenylcyclopentadienyl-[1,2-b]-thiophene)zirconium dichloride; dimethylsilandiylbis-6-(2-methyl-5-isopropyl-3-phenylcyclopentadienyl-[1,2-b]-thiophene)zirconium dichloride; dimethylsilandiylbis-6-(2-methyl-5-isopropyl-3-(4'-tert.-butylphenyl)cyclopentadienyl-[1,2-b]-thiophene)zirconium dichloride; dimethylsilandiyl-6-(2-methyl-5-isopropyl-3-phenylcyclopentadienyl-[1,2-b]-thiophene)-6-(2,5-dimethyl-3-phenylcyclopentadienyl-[1,2-b]-thiophene)zirconium dichloride; dimethylsilandiyl-6-(2-methyl-5-isopropyl-3-(4'-tert.-butylphenyl)cyclopentadienyl-[1,2-b]-thiophene)-6-(2,5-dimethyl-3-(4'-tert.-butylphenyl)cyclopentadienyl-[1,2-b]-thiophene)zirconium dichloride; dimethylsilandiyl-6-(2-methyl-5-isopropyl-3-phenylcyclopentadienyl-[1,2-b]-thiophene)-6-(2,5-dimethyl-3-(4'-tert.-butylphenyl)cyclopentadienyl-[1,2-b]-thiophene)zirconium dichloride; dimethylsilandiyl-6-(2-methyl-5-isopropyl-3-(4'-tert.-butylphenyl)cyclopentadienyl-[1,2-b]-thiophene)-6-(2,5-dimethyl-3-phenylcyclopentadienyl-[1,2-b]-thiophene)zirconium dichloride; dimethylsilandiyl-6-(2,5-dimethyl-3-phenylcyaopentadienyl-[1,2-b]-thiophene)(2-methyl-4-phenylindenyl)zirconium dichloride; dimethylsilandiyl-6-(2,5-dimethyl-3-phenylcyclopentadienyl-[1,2-b]-thiophene)(2-isopropyl-4-phenylindenyl)zirconium dichloride; dimethylsilandiyl-6-(2,5-dimethyl-3-phenylcyclopentadienyl-[1,2-b]-thiophene)(2-isopropyl-4-(1-naphthyl)indenyl)zirconium dichloride; dimethylsilandiyl-6-(2,5-dimethyl-3-phenylcyclopentadienyl-[1,2-b]-thiophene)(2-isopropyl-4-(4'-tert.-butylphenyl)indenyl)zirconium dichloride; dimethylsilandiyl-6-(2,5-dimethyl-3-phenylcyclopentadienyl-[1,2-b]-thiophene)(2-isopropyl-4-(3',5'-dimethylphenyl)indenyl)zirconium dichloride; dimethylsilandiyl-6-(2,5-dimethyl-3-phenylcyclopentadienyl-[1,2-b]-thiophene)(2-isopropyl-4-(2',5'-dimethylphenyl)indenyl)zirconium dichloride; dimethylsilandiyl-6-(2-methyl-5-isopropyl-3-phenylcyclopentadienyl-[1,2-b]-thiophene)(2-methyl-4-phenylindenyl)zirconium dichloride; dimethylsilandiyl-6-(2-methyl-5-isopropyl-3-phenylcyclopentadienyl-[1,2-b]-thiophene)(2-ethyl-4-phenylindenyl)zirconium dichloride; dimethylsilandiyl-6-(2-methyl-5-isopropyl-3-(3',5'-dimethylphenyl)cyclopentadienyl-[1,2-b]-thiophene)(2-methyl-4-phenylindenyl)zirconium dichloride; dimethylsilandiyl-6-(2-methyl-5-isopropyl-3-(2',5'-dimethylphenyl)cyclopentadienyl-[1,2-b]-thiophene)(2-methyl-4-phenylindenyl)zirconium dichloride; dimethylsilandiyl-6-(2-methyl-5-isopropyl-3-(4'-tert.-butylphenyl)cyclopentadienyl-[1,2-b]-thiophene)(2-methyl-4-phenylindenyl)zirconium dichloride; and dimethylsilandiyl-6-(2-methyl-5-isopropyl-3-(3',5'-dimethylphenyl)cyclopentadienyl-[1,2-b]-thiophene)(2-methyl-4-(4'-methylphenyl)indenyl)zirconium dichloride; or the corresponding dimethylzirconium, monochloromono(alkylaryloxy)zirconium and di(alkylaryloxy)zirconium compounds.

The propylene polymers used in the process of the present invention can also be prepared in the presence of conventional catalysts of the Ziegler/Natta type comprising the product of the reaction between an aluminium alkyl and a solid component comprising a transition metal supported on MgCl₂ in an active form. In particular, the best results are obtained when using catalysts comprising the product of the reaction between:
(i) a solid component comprising a titanium compound without Ti-π bonds and an electron donor compound (internal donor) supported on a magnesium halide in an active form; and
(ii) an Al-alkyl compound and, if appropriate, an electron donor compound (external donor).

The use of an external electron donor compound is generally necessary to obtain propylene polymers having an isotacticity (mm) greater than 80. Nevertheless, if compounds of the type described in Patent EP-A-361,493 are used as internal electron donor compounds, the stereospecificity of the catalyst is by itself sufficiently high and it is not necessary to use an external electron donor compound.

The magnesium halides, preferably MgCl₂, in an active form used as support for Ziegler-Natta catalysts are widely known from the patent literature. U.S. Patents 4,298,718 and 4,495,338 described for the first time the use of these compounds in Ziegler-Natta catalysis. It is known from these patents that the magnesium halides used in the active form as support or co-support in catalyst components for the polymerization of olefins are characterized by X-ray spectra in which the most intense diffraction line appearing in the spectra of the inactive halide is reduced in intensity and replaced by a halo whose intensity maximum is displaced towards angles which are smaller with respect to that of the most intense line.

The titanium compound is preferably selected from the halides and halogeno-alcoholates. Preferred titanium compounds are TiCl₄, TiCl₃ and the halogeno-alcoholates of the formula Ti(OR¹)ₘXₙ in which R¹ is a hydrocarbon radical with 1-12 carbon atoms or a group COR¹, X is halogen and (m+n) is the valency of the titanium.

Advantageously, the catalytic component (i) is used in the form of spherical particles having an average diameter of between about 10 and 150 µm. Suitable methods for preparing the said components in a spherical form are described, for example, in the Patents EP-A-395,083, EP-A-553,805 and EP-A-553,806, the description of which, relating to the method of preparation and to the characteristics of the products, is incorporated herein by reference.

Suitable internal electron donor compounds include the ethers, esters and in particular the esters of polycarboxylic acids; the amines, the ketones and the 1,3-diethers of the type described in the Patents EP-A-361,493, EP-A-361,494, EP-A-362,705 and EP-A-451,645.

The Al-alkyl compound (ii) is preferably selected from the aluminium trialkyls, such as, for example, Al-triethyl, Al-triisobutyl, Al-tri-n-butyl, Al-tri-n-hexyl and Al-tri-n-octyl. Mixtures of Al-trialkyls with Al-alkyl halides, Al-alkyl hydrides or Al-alkyl sesquichlorides such as AlEt₂Cl and Al₂Et₃Cl₃ may also be used.

The external donor can be of the same type as or can differ from the internal donor. If the internal donor is the ester of a polycarboxylic acid, in particular a phthalate, the external donor is preferably selected from the silicon compounds of the formula R₁R₂Si(OR)₂, where R₁ and R₂ are alkyl, cycloalkyl or aryl radicals having 1-18 carbon atoms. Examples of such silanes are methyl-cyclohexyl-dimethoxy-silane, diphenyl-dimethoxy-silane, methyl-t-butyl-dimethoxy-silane and dicyclopentyl-dimethoxy-silane.

The radiant heat absorbents of the invention include materials that absorb infrared radiation through a significant range of the infrared spectrum, where infrared radiation is defined as having a radiation wavelength of from about 700 to about 25,000 nm. The presence of the radiant heat absorbent within the polymer compositions not only improves the rate of heat transfer to the polymer preform relative to preforms not containing the radiant heat absorbent, but also facilitates better distribution of heat within the preform, thereby allowing more efficient use of the heat input, and permitting higher container production rates, while maintaining comparable preform temperatures. Preferably, the radiant heat absorbents include carbon black, graphite, gas black, oil furnace black, channel black, anthracene black, acetylene black, thermal black, lamp black, vegetable black, animal black, anthraquinone derivatives and mixtures thereof. More preferably, the radiant heat absorbent is carbon black or graphite. The radiant heat absorbents can be present in an amount from about 1 to about 1000 ppm, preferably from about 1 to about 100 ppm and more preferably from about 1 to about 40 ppm, based on the weight of the propylene polymer. If the radiant heat absorbent is a strong chromophore in the visible range, it is preferably used in an amount of about 1 to about 40 ppm, more preferably in an amount from about 1.5 to about 30 ppm, and most preferably about 2 to about 20 ppm. When the radiant heat absorbent is carbon black, the average particle size of the radiant heat absorbent is preferably from about 5 to about 40 nm, more preferably from about 10 to about 35 nm. When the radiant heat absorbent is graphite, the average particle size is preferably from about 3 to about 8 µm, more preferably about 4.5 to about 7.5 µm.

Conventional nucleation agents may be added to the propylene polymer compositions used to form the containers of the invention. Examples of suitable nucleating agents are inorganic additives such as talc, silica or kaolin, salts of monocarboxylic or polycarboxylic acids, e.g. sodium benzoate or aluminum tert-butylbenzoate, dibenzylidenesorbitol or its C₁-C₈-alkyl-substituted derivatives such as methyldibenzylidenesorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate and sodium 2,2'-ethylidene-bis(4,6-di-t-butylphenyl) phosphate. The propylene polymer compositions can contain up to 5 wt% of nucleating agent. When present, the nucleating agent is preferably present in an amount from 0.1 to 1% by weight, more preferably from 0.15 to 0.25% by weight. Preferably the nucleating agent is dibenzylidenesorbitol or a dibenzylidenesorbitol derivative. More preferably, the nucleating agent is dimethyldibenzylidenesorbitol.

Other additives used in the propylene polymer compositions can include, but are not limited to phenolic antioxidants, phosphite-series additives, anti-static agents, pigments and calcium stearate. Tetrakis[methylene-3-(3',5'-di-t-4-hydroxyphenyl)propionate] methane and n-octadecinyl-3-(4'-hydroxynyl) propionate are particularly preferred as the phenolic antioxidants. When present, the content of the phenolic antioxidant can range from about 0.001 to about 2 parts by weight, preferably from about 0.002 to about 1.8 parts by weight, more preferably from about 0.005 to about 1.5 parts by weight. Tris(2,4-di-t-butylphenyl) phosphite is preferred as the phosphite additive. When present, the content of the phosphite can range from about 0.001 to about 1.5 parts by weight, preferably from about 0.005 to about 1.5 parts by weight, more preferably from about 0.01 to about 1.0 parts by weight. When present, the content of calcium stearate can range from about 0.01 to about 2 parts by weight, preferably from about 0.02 to about 1.5 parts by weight, more preferably from about 0.03 to about 1.5 parts by weight.

Preferably, the containers produced by the process of the invention have a haze value less than 25.0%, more preferably less than 8.0%, most preferably less than 4.0%.

As used in this specification, container means any article produced by stretch blow molding procedures. Preferably, the container is a bottle or a wide mouth jar.

The process of the invention includes a first step of molding the propylene polymer compositions containing the radiant heat absorbent described above, preferably at a temperature from about 200°C to about 280°C to form a preform. The temperature would be selected by those skilled in the art depending on the particular polymer composition involved. The first molding step can include injection molding, compression molding or blow molding. Injection molding is preferred. The second step of the process of the invention includes stretch blow molding the preform formed in the first step, preferably at a temperature from about 100°C to about 160°C, where the heat is supplied by infrared radiation. Again, the stretch blow molding temperature would be selected by those skilled in the art depending on the polymer composition being molded. The preforms are heated by infrared radiation in a heating oven. Typically, the preforms are conveyed along a bank of infrared heating units while being rotated to evenly distribute the heat. The bottles may also be contacted with cooling air during and after heating to minimize overheating of the preform surface. Once the heated preforms exit the heating oven, the preforms are transferred to a blow mold. A stretch rod is inserted into the preform to stretch the preform in the axial direction. Pressurized air at about 10 atm to about 30 atm, preferably about 18 to about 22 atm is introduced to complete the blow molding of the finished bottle. Optionally, the pressurized air can be introduced in two steps, where a pre-blow is performed by introducing pressurized air at about 4 atm to about 12 atm, preferably, about 6.5 am to about 8.5 atm, followed by the final blow molding at the higher pressures described above.

Both steps in the process of the invention can be performed in the same machine, as in the so-called single-stage process. Alternately, preforms may be produced in a first piece of equipment, and subsequently routed to a second piece of equipment for stretch blow molding, as in the so-called two-stage process. In such a case, the preforms can be allowed to cool fully

Unless otherwise specified, the properties of the olefin polymer materials, and compositions that are set forth in the following examples have been determined according to the test methods set forth in Table I below.

| **Table I** | |
|---|---|
| Melt Flow Rate ("MFR") | ASTM D1238, (230° C; 2.16 kg), units of dg/min |
| Isotactic Index, ("I.I") | Defined as the percent of olefin polymer insoluble in xylene. The weight percent of olefin polymer soluble in xylene at room temperature is determined by adding 2.5 g of polymer to 250 ml of xylene at room temperature in a vessel equipped with a stirrer, and heating at 1335°C with agitation for 20 minutes to dissolve the polymer. The solution is cooled to 25°C while continuing the agitation, and then left to stand without agitation for 30 minutes so that the solids can settle. The solids are filtered with filter paper, the remaining solution is evaporated by treating it with a nitrogen stream, and the solid residue is vacuum dried at 80°C until a constant weight is reached. These values correspond substantially to the isotactic index determined by extracting with boiling n-heptane, which by definition constitutes the isotactic index of polypropylene. |
| Gloss | ASTM D2457 |
| Haze | ASTM D 1003 |

Unless otherwise specified, all references to parts, percentages and ratios in this specification refer to percentages by weight.

The following examples illustrate the infrared heat absorption of propylene polymer materials using radiant heat absorbents.

### Control Example 1 and Examples 2-4

A polypropylene random copolymer produced using Avant ZN118, a Ziegler Natta catalyst, containing 3.4% ethylene and having a MFR of 6 dg/min and I.I. of 93.7 wt%; both polymer and catalyst being commercially available from Basell USA Inc, was compounded into pellets on a 25 mm Berstoff twin screw extruder commercially available from Berstorff Ltd, with levels of carbon black at 0, 2, 4, and 10 ppm and 500 ppm of calcium stearate, 500 ppm DHT-4A commercially available from Kyowa Chemical Ind. Co. Ltd., 1200 ppm Irganox B225, commercially available from Ciba Specialty Chemicals Corporation, and 800 ppm of GMS 52 commercially available from Clariant International Ltd. The carbon black was introduced in the form of a concentrate with 10% of a 30 nanometer carbon black in a linear low density polyethylene having a 20 MFR (measured at 190°C).

The pellets were injection molded into a preform using a reciprocating screw injection molding machine at a set temperature of 235°C. The preforms were then introduced into a single cavity stretch blow molding machine, in a time frame of 2 to 4 days after they were injection molded. The preforms were placed on a moving belt and the preforms were rotated. The rotating preforms passed in front of infra-red lamps, and preform temperatures were measured at the oven exit. Preforms of polymer formulations containing the various levels of carbon black described above were processed at a rate of 600 bottles/hour, and the preform exit temperature measured. Upon exiting the heating/conditioning area, the preforms were transferred to the blowing station. The blowing nozzle was then inserted into the preform, guiding the stretching rod. There was a pressure pre-blow of 7.5 atm that pre-stretched the preform to allow the removal of the stretching rod. This was followed by high pressure blowing at 20 atm for optimized distribution of the material thickness in the bottle wall.

Table 2 summarizes the preform exit temperature of Control Example 1 and Examples 2-4.

| **Table 2** | | | | |
|---|---|---|---|---|
| | **Control Example 1** | **Example 2** | **Example 3** | **Example 4** |
| PPM Carbon Black | 0 | 2 | 4 | 10 |
| Preform exit temperature, DegC | 119.9 | 126.3 | 130.9 | 141 |

The data of Table 2 illustrates that increasing levels of carbon black in the bottles improved the infrared heat absorption, as demonstrated by the increased preform exit temperature.

The following examples illustrate a procedure for measuring the effect of radiant heat absorbents on the production rates of injection stretch blow molded bottles.

### Control Example 5 and Examples 6-9

A polypropylene random copolymer produced using Avant ZN118, a Ziegler Natta catalyst, containing 3.4% ethylene and having a MFR of 6 dg/min and I.I. of 93.7 wt%; both polymer and catalyst being commercially available from Basell USA Inc, was compounded into pellets on a 25 mm Berstoff twin screw extruder commercially available from Berstorff Ltd, with levels of carbon black at 0, 2, 4, 10, and 20 ppm and 500 ppm of calcium stearate, 500 ppm DHT-4A commercially available from Kyowa Chemical Ind. Co. Ltd., 1200 ppm Irganox B225, commercially available from Ciba Specialty Chemicals Corporation, and 800 ppm of GMS 52 commercially available from Clariant International Ltd. The carbon black was introduced in the form of a concentrate with 10% of a 30 nanometer carbon black in a linear low density polyethylene having a 20 MFR (measured at 190°C).

The pellets were injection molded into a preform using a reciprocating screw injection molding machine at a set temperature of 235°C. The preforms were then introduced into a single cavity stretch blow molding machine, in a time frame of 2 to 4 days after they were injection molded. The preforms were placed on a moving belt and the preforms were rotated. The rotating preforms passed in front of infra-red lamps, and preform temperatures were measured at the oven exit. The preform exit temperature target was 120°C. Preforms of polymer formulations containing the various levels of carbon black described above were processed, with the preform processing rate being adjusted to maintain the target exit temperature. Upon exiting the heating/conditioning area, the preforms were transferred to the blowing station. The blowing nozzle was then inserted into the preform, guiding the stretching rod. There was a pressure pre-blow of 7.5 atm that pre-stretched the preform to allow the removal of the stretching rod. This was followed by high pressure blowing at 20 atm for optimized distribution of the material thickness in the bottle wall.

Table 3 summarizes the bottle properties and production rate of Control Example 5 and Examples 6-9.

| **Table 3** | | | | | |
|---|---|---|---|---|---|
| | **Control Example 5** | **Example 6** | **Example 7** | **Example 8** | **Example 9** |
| PPM Carbon Black | 0 | 2 | 4 | 10 | 20 |
| Average bottle weight (gms) | 23.9 | --- | 24.2 | --- | 24.0 |
| Average side wall thickness (cm) | 0.0483 | --- | 0.0561 | --- | 0.0531 |
| Minimum side wall thickness (cm) | 0.0325 | --- | 0.0366 | --- | 0.0345 |
| Maximum side wall thickness (cm) | 0.0678 | --- | 0.0820 | --- | 0.0988 |
| Preform exit temperature, DegC | 119.8 | 120.4 | 121.0 | 121.0 | 123.1 |
| Max. Production Rate, Bottles/Hr | 600 | 650 | 715 | 825 | 1000 |
| Haze (%) | 4.32 | 2.44 | 2.27 | --- | 2.57 |
| Gloss @ 45° (%) | 79.7 | 72.7 | 82.8 | --- | 80.3 |

The results of Table 3 demonstrate that Examples 6-9 were produced with a higher maximum production rate compared to Control Example 5, while possessing good haze values.

### Control Example 10 and Example 11

Control Example 10 was prepared by first prepolymerizing Avant M 101, a metallocene catalyst commercially available from Basell USA Inc. with propylene, where the yield of pre-polymerized catalyst was about 60-80 g/g-catalyst. The pre-polymerized catalyst and propylene were then continuously fed into a first loop reactor. The homopolymer formed in the first loop reactor and ethylene were fed to a second reactor. The temperature of both loop reactors was 70 °C. The polymer was discharged from the second reactor, separated from the unreacted monomer and dried.

The resultant polymer contained 40% of a random copolymer containing 3.0% ethylene with an I.I. of 99.5 wt%, and 60 wt% of propylene homopolymer having an I.I. of 99.5 wt%, with the final polymer having an MFR of 11 dg/min. The composition was extruded into pellets on a Leistritz micro 27, commercially available from Leistritz Extruder Corporation, with 500 ppm of calcium stearate, 500 ppm DHT-4A commercially available from Kyowa Chemical Ind. Co. Ltd., 1200 ppm Irganox B225, commercially available from Ciba Specialty Chemicals Corporation, 2000 ppm Millad 3988, commercially available from Milliken & Company, and 800 ppm of GMS 55 commercially available from Clariant International Ltd.

Example 11 was prepared as in Control Example 10 except that 20 ppm of a fused graphite, commercially available as Conductograph GFG5 from SGL Carbon Group having an average particle size of 6.5 pm was added prior to extrusion. The composition was extruded into pellets as in Control Example 10.

The resulting pellets were injection molded into a preform using a Netstal reciprocating screw injection molding machine, commercially available from Netstal Machinery, Inc, at a melt temperature of 225C. The preforms were then introduced into a reheat stretch blow molding machine, in a time frame of two months after they were injection molded. The preforms were then conveyed past IR heaters, thereby heating them to a consistent forming temperature. The preform exit temperature target was about 120°C. Preforms of polymer formulations Control Example 10 and Example 11 were processed to form bottles, with the preform processing rate being increased up to the point where processing difficulties (e.g., loss of clarity, bottle warpage, non-uniform wall thickness) began to develop.

Table 4 summarizes the bottle properties and production rate of Control Example 10 and Example 11.

| **Table 4** | | |
|---|---|---|
| | **Control Example 10** | **Example 11** |
| Conductograph GFG5, ppm | 0 | 20 |
| Average bottle weight (gms) | 24.0 | 24.0 |
| Minimum side wall thickness (mm) | 0.42 | 0.38 |
| Maximum side wall thickness (mm) | 0.80 | 1.19 |
| Max. Production Rate, Bottles/Hr | 900 | 1100 |
| Haze (%) | 21 | 21 |

The results of Table 4 demonstrate that the bottles of Example 11 were produced with a higher maximum production rate compared to Control Example 10, while maintaining haze values.

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

## Claims

1. A process for producing clear injection stretch blow molded containers comprising:
I. molding a propylene polymer composition comprising:
(A) a propylene polymer consisting of:
(i) about 25 wt% to about 75 wt% of a homopolymer having an isotactic index greater than about 80 wt%; and
(ii) about 25 wt% to about 75 wt% of a random copolymer of propylene and at least one olefin chosen from ethylene and C₄-C₁₀ α-olefins, containing about 0.3 to about 30 wt% of the olefin, and having an isotactic index greater than about 60 wt%,
the propylene polymer having a melt flow rate of from about 1 to about 50; and
(B) about 1 to about 1000 ppm, based on the weight of the propylene polymer, of at least one radiant heat absorbent that absorbs infrared radiation having a radiation wavelength of from about 700 to about 25,000 nm.
thereby forming a preform; and
II. stretch blow molding the preform;
wherein in step II, heat is supplied by infrared radiation, and the containers have a haze value less than 25.0%.

2. The process of claim 1 wherein the molding step I is at a temperature of about 200°C to about 280°C.

3. The process of claim 1 wherein the stretch blow molding step II is at a temperature of about 100°C to about 160°C.

4. The process of claim 1 wherein the radiant heat absorbent is chosen from carbon black, graphite, gas black, oil furnace black, channel black, anthracene black, acetylene black, thermal black lamp black, vegetable black, animal black, anthraquinone derivatives and mixtures thereof.

5. The process of claim 1 wherein the molding of step I comprises injection molding, compression molding or blow molding.

6. The process of claim 5 wherein the molding of step I comprises injection molding.

7. The process of claim 1 wherein the haze value is less than 8.0.

8. The process of claim 1 wherein the melt flow rate is from about 2 to about 40.

9. The process of claim 4 wherein the radiant heat absorbent is chosen from carbon black, graphite and mixtures thereof

10. The process of claim 9 wherein the radiant the absorbent is carbon black.

11. The process of claim 10 wherein the radiant heat absorbent is present in an amount from about 1 to about 40 ppm.

12. The process of claim 9 wherein the radiant heat absorbent is graphite.

13. The process of claim 1 wherein the radiant heat absorbent is present in an amount from about 1 to about 100 ppm.

14. The process of claim 13 wherein the radiant heat absorbent is present in an amount from about 1 to about 40 ppm.

15. The process of claim 1 wherein the propylene polymer composition is produced using a metallocene catalyst.

16. The process of claim 1 wherein the propylene polymer composition is produced using a Ziegler Natta catalyst.

17. The process of claim 1 wherein the propylene polymer further comprises:
(C) up to 5 wt% of a nucleating agent.

18. The process of claim 17 wherein the nucleating agent is chosen from dibenzylidenesorbitol, its C₁-C₈-alkyl-substituted derivatives and mixtures thereof.

19. The process of claim 18 wherein the nucleating agent is dimethyldibenzylidenesorbitol.

## Patentansprüche

1. Verfahren zum Herstellen von klaren spritzstreckblasgeformten Behältnissen, umfassend:
I. Formen einer Propylenpolymer-Zusammensetzung, die Folgendes umfasst:
(A) ein Propylenpolymer, bestehend aus:
(i) ca. 25 Gew.-% bis ca. 75 Gew.-% eines Homopolymers mit einem isotaktischen Index von größer als ca. 80 Gew.-%; und
(ii) ca. 25 Gew.-% bis ca. 75 Gew.-% eines statistischen Copolymers von Propylen und mindestens einem Olefin, das aus Ethylen und C₄-C₁₀-α-Olefinen ausgewählt ist, enthaltend ca. 0,3 bis ca. 30 Gew.-% des Olefins und mit einem isotaktischen Index von größer als ca. 60 Gew.-%,
wobei das Propylenpolymer eine Schmelzflussrate von ca. 1 bis ca. 50 aufweist; und
(B) ca. 1 bis ca. 1000 ppm, bezogen auf das Gewicht des Propylenpolymers, von mindestens einem Strahlungswärme-Absorptionsmittel, das Infrarotstrahlung mit einer Strahlungswellenlänge von ca. 700 bis ca. 25.000 nm absorbiert,
wodurch ein Vorformling gebildet wird; und
II. Streckblasformen des Vorformlings;
worin in Schritt II Wärme durch Infrarotstrahlung bereitgestellt wird und die Behältnisse einen Haze von weniger als 25,0 % aufweisen.

2. Verfahren nach Anspruch 1, worin der Formschritt I bei einer Temperatur von ca. 200 °C bis ca. 280 °C erfolgt.

3. Verfahren nach Anspruch 1, worin der Streckblasformschritt II bei einer Temperatur von ca. 100 °C bis 160 °C erfolgt.

4. Verfahren nach Anspruch 1, worin das Strahlungswärme-Absorptionsmittel aus Ruß, Graphit, Gasruß, Öl-Furnace-Ruß, Kanalruß, Anthracenruß, Acetylenruß, Thermalruß, Lampenruß, Pflanzenruß, Knochenschwarz, Anthrachinon-Derivaten und Gemischen davon ausgewählt ist.

5. Verfahren nach Anspruch 1, worin das Formen von Schritt I Spritzgießen, Formpressen oder Blasformen umfasst.

6. Verfahren nach Anspruch 5, worin das Formen von Schritt I Spritzgießen umfasst.

7. Verfahren nach Anspruch 1, worin der Haze weniger als 8,0 beträgt.

8. Verfahren nach Anspruch 1, worin die Schmelzflussrate von ca. 2 bis ca. 40 beträgt.

9. Verfahren nach Anspruch 4, worin das Strahlungswärme-Absorptionsmittel aus Ruß, Graphit und Gemischen davon ausgewählt ist.

10. Verfahren nach Anspruch 9, worin das Strahlungswärme-Absorptionsmittel Ruß darstellt.

11. Verfahren nach Anspruch 10, worin das Strahlungswärme-Absorptionsmittel in einer Menge von ca. 1 bis ca. 40 ppm vorliegt.

12. Verfahren nach Anspruch 9, worin das Strahlungswärme-Absorptionsmittel Graphit darstellt.

13. Verfahren nach Anspruch 1, worin das Strahlungswärme-Absorptionsmittel in einer Menge von ca. 1 bis ca. 100 ppm vorliegt.

14. Verfahren nach Anspruch 13, worin das Strahlungswärme-Absorptionsmittel in einer Menge von ca. 1 bis ca. 40 ppm vorliegt.

15. Verfahren nach Anspruch 1, worin die Propylenpolymer-Zusammensetzung unter Verwendung eines Metallocen-Katalysators hergestellt wird.

16. Verfahren nach Anspruch 1, worin die Propylenpolymer-Zusammensetzung unter Verwendung eines Ziegler-Natta-Katalysators hergestellt wird.

17. Verfahren nach Anspruch 1, worin das Propylenpolymer ferner Folgendes umfasst:
(C) bis zu 5 Gew.-% eines Keimbildners.

18. Verfahren nach Anspruch 17, worin der Keimbildner aus Dibenzylidensorbitol, seinen C₁-C₈-Alkyl-substituierten Derivaten und Gemischen davon ausgewählt ist.

19. Verfahren nach Anspruch 18, worin der Keimbildner Dimethyldibenzylidensorbitol darstellt.

## Revendications

1. Procédé pour produire des conteneurs moulés par injection-étirage-soufflage clairs, comprenant :
I. le moulage d'une composition à base de polymère de propylène, comprenant :
(A) un polymère de propylène constitué par :
(i) environ 25% en poids à environ 75% en poids d'un homopolymère présentant un indice isotactique supérieur à environ 80% en poids : et
(ii) environ 25% en poids à environ 75% en poids d'un copolymère statistique de propylène et d'au moins une oléfine choisie parmi l'éthylène et les α-oléfines en C₄-C₁₀, contenant environ 0,3 à environ 30% en poids de l'oléfine et présentant un indice isotactique supérieur à environ 60% en poids,
le polymère de propylène présentant un indice de fusion d'environ 1 à environ 50 ; et
(B) environ 1 à environ 1000 ppm, sur base du poids du polymère de propylène, d'au moins un absorbant de la chaleur de radiation, qui absorbe la radiation infrarouge présentant une longueur d'onde de radiation d'environ 700 à environ 25 000 nm,
formant ainsi une préforme ; et
II. le moulage par étirage-soufflage de la préforme ;
où, dans l'étape II, la chaleur est fournie par radiation infrarouge et les conteneurs présentent une valeur de Haze inférieure à 25,0%.

2. Procédé selon la revendication 1, dans lequel l'étape de moulage I est réalisée à une température d'environ 200°C à environ 280°C.

3. Procédé selon la revendication 1, dans lequel l'étape de moulage par étirage-soufflage II est réalisée à une température d'environ 100°C à environ 160°C.

4. Procédé selon la revendication 1, dans lequel l'absorbant de la chaleur de radiation est choisi parmi le noir de carbone, le graphite, le noir de gaz, le noir de chaudière à mazout, le noir au tunnel, le noir d'anthracène, le noir d'acétylène, le noir thermique, le noir de lampe, le noir végétal, le noir animal, les dérivés d'anthraquinone et leurs mélanges.

5. Procédé selon la revendication 1, dans lequel le moulage de l'étape I comprend le moulage par injection, le moulage par compression ou le moulage par soufflage.

6. Procédé selon la revendication 5, dans lequel le moulage de l'étape I comprend le moulage par injection.

7. Procédé selon la revendication 1, dans lequel la valeur de Haze est inférieure à 8,0.

8. Procédé selon la revendication 1, dans lequel l'indice de fusion est d'environ 2 à environ 40.

9. Procédé selon la revendication 4, dans lequel l'absorbant de la chaleur de radiation est choisi parmi le noir de carbone, le graphite et leurs mélanges.

10. Procédé selon la revendication 9, dans lequel l'absorbant de la chaleur de radiation est le noir de carbone.

11. Procédé selon la revendication 10 dans lequel l'absorbant de la chaleur de radiation est présent en une quantité d'environ 1 à environ 40 ppm.

12. Procédé selon la revendication 9, dans lequel l'absorbant de la chaleur de radiation est le graphite.

13. Procédé selon la revendication 1 dans lequel l'absorbant de la chaleur de radiation est présent en une quantité d'environ 1 à environ 100 ppm.

14. Procédé selon la revendication 13 dans lequel l'absorbant de la chaleur de radiation est présent en une quantité d'environ 1 à environ 40 ppm.

15. Procédé selon la revendication 1, dans lequel la composition à base de polymère de propylène est produite avec utilisation d'un catalyseur de type métallocène.

16. Procédé selon la revendication 1, dans lequel la composition à base de polymère de propylène est produite avec utilisation d'un catalyseur de Ziegler Natta.

17. Procédé selon la revendication 1, dans lequel le polymère de propylène comprend en outre : (C) jusqu'à 5% en poids d'un agent de nucléation.

18. Procédé selon la revendication 17 dans lequel l'agent de nucléation est choisi parmi le dibenzylidènesorbitol, ses dérivés substitués par C₁-C₈-alkyle et leurs mélanges.

19. Procédé selon la revendication 18, dans lequel l'agent de nucléation est le diméthyldibenzylidènesorbitol.
